# EUROPÄISCHE PATENTSCHRIFT

(11) **EP 1 712 896 B1**
(45) Veröffentlichungstag und Bekanntmachung des Hinweises auf die Patenterteilung: **31.03.2010**
(21) Anmeldenummer: 06007335.0
(22) Anmeldetag: 06.04.2006
(51) Int. Cl.: G01N 21/64, G01N 33/487, G01N 33/533, C12M 1/34, C12Q 1/04

(54) **Vorrichtung und Verfahren zur Detektion von Schadstoffen**
Device and method for detecting pollutants
Dispositif et procédé destinés à la détection de substances toxiques

(30) Priorität: 15.04.2005 DE 102005017753; 13.10.2005 DE 102005049508
(43) Veröffentlichungstag der Anmeldung: 18.10.2006
(73) Patentinhaber: Carl Zeiss Optronics GmbH, 73447 Oberkochen (DE)
(72) Erfinder: Correns, Nico, 99425 Weimar (DE); Rode, Michael, 07743 Jena (DE); Kürbitz, Gunther Dr., 89551 Königsbronn (DE); Schlemmer, Harry Dr., 73447 Oberkochen (DE)
(74) Vertreter: Patentanwälte Freischem

(56) Entgegenhaltungen:
- EP-A- 1 158 292
- WO-A-2004/106922
- US-A- 5 828 058
- US-A1- 2004 055 362

## Beschreibung

Die Erfindung betrifft eine Vorrichtung und ein Verfahren zur Detektion von Schadstoffen.

In der heutigen Zeit ist es wichtig und oft auch notwendig, den Gehalt von Schadstoffen, insbesondere von chemischen und biologischen Schadstoffen, in der Luft oder in einer Flüssigkeit zu bestimmen. Besonders erforderlich ist dies beispielsweise in Pharmazie- oder Bio-Technologicanlagen, um zu bestimmen, ob Kontaminationen der Luft mit Schadstoffen vorliegen. Notwendig ist dies auch in Krankenhäusern mit Isolierstationen, um insbesondere biologische Schadstoffe aufzuspüren und um so die Verbreitung einer anstekkenden Krankheit zu verhindern. Eine weitere wichtige Anwendung ist die Bestimmung von biologischen Schadstoffen, die zu militärischen Zwecken, insbesondere als Waffe, eingesetzt werden können. Gerade in der heutigen Zeit, in der leider in vielen Ländern terroristische Anschläge verübt werden, ist eine schnelle, gefahrlose und effiziente Bestimmung von chemischen und biologischen Schadstoffen erforderlich.

Die WO 2004/106922 A1 und die EP 1 640 718 A1 betreffen ein Verfahren zur Detektion von Stoffen. Bei dem bekannten Verfahren wird eine Probe in einer Flüssigkeit oder Suspension in einer Homogenisierungskammer homogenisiert. Anschließend wird ein Fluoreszenzmarker in die Flüssigkeit oder Suspension in die Homogenisierungskammer eingebracht, so dass dieser mit einem Analyt der Flüssigkeit oder der Suspension reagiert. Erst im Anschluss daran wird die Flüssigkeit oder Suspension in einen Messraum gebracht. In diesem Messraum findet dann mittels Anregung des Fluoreszenzmarkers eine Detektion statt.

Ferner ist aus der US 5,828,058 ein Detektionssystem basierend auf der Messung von elektromagnetischen Wellen bekannt.

Aus der US 2003/0098422 A1 ist eine Vorrichtung zur Detektion von biologischen Schadstoffe bekannt. Bei der bekannten Vorrichtung wird zunächst eine Probe in einen Probenraum eingebracht und dort mittels eines Lasers bestrahlt. Aufgrund der Anregung mittels des Laserstrahls emittieren mögliche in der Probe enthaltene biologische Schadstoffe Fluoreszenzlicht. Die emittierte Strahlung eines bestimmten biologischen Schadstoffes ist dabei für diesen bestimmten biologischen Schadstoff charakteristisch, so daß man durch Auswertung der emittierten Strahlung feststellen kann, welcher biologische Schadstoff in der Probe enthalten ist.

Eine ähnliche Vorrichtung, die nach demselben Prinzip arbeitet, ist der US 2003/0098421 A1 zu entnehmen.

Aus der US 5,532,493 ist eine weitere Vorrichtung zur Detektion von biologischen Schadstoffen bekannt. Auch bei dieser bekannten Vorrichtung wird eine Probe mittels eines Laserstrahls angeregt und anschließend das Fluoreszenzspektrum einer Probe dahingehend ausgewertet, ob das charakteristische Spektrum eines biologischen Schadstoffes vorhanden ist. Vor Einstrahlung des Laserlichts auf die Probe wird die Probe allerdings mit einem fluoreszierenden Nachweismolekül zusammengebracht.

Um Personen nicht unnötig zu gefährden, ist es oft notwendig, daß die Personen sich nicht dort aufhalten, wo ein chemischer oder biologischer Schadstoff vermutet und nachgewiesen werden soll. Aus diesem Grunde ist es erforderlich, auf Ferndetektions-Vorrichtungen zurückzugreifen. Die bereits oben genannten bekannten Vorrichtungen eignen sich zur Ferndetektion nicht. Zwar ist es möglich, von einem sicheren Ort einen Laserstrahl zu dem Ort zu leiten, an dem eine Probe ausgemessen werden soll. Allerdings ist aufgrund von Störeinflüssen wie das Tageslicht eine Messung der Fluoreszenz eines biologischen Schadstoffs aus der Ferne fast unmöglich.

Der Erfindung liegt daher die Aufgabe zugrunde, eine Vorrichtung und ein Verfahren zur Detektion von Schadstoffen, insbesondere chemische und biologische Schadstoffe, anzugeben, die sich zur Ferndetektion eignen und somit Personen, die die Vorrichtung bedienen, nicht gefährden.

Diese Aufgabe wird erfindungsgemäß mit einer Vorrichtung mit den Merkmalen des Anspruchs 1 gelöst. Ein erfindungsgemäßes Verfahren ist durch die Merkmale des Anspruchs 15 charakterisiert.

Die erfindungsgemäße Vorrichtung eignet sich zur Detektion von chemischen und biologischen Schadstoffen. Sie weist mindestens eine Lichtquelle sowie mindestens einen Probenraum auf, in den eine zu untersuchende Probe eingeführt wird und in dem die Probe mittels der Lichtquelle bestrahlt wird. Die Probe ist beispielsweise eine Luftprobe oder eine Flüssigkeitsprobe. Ferner ist bei der erfindungsgemäßen Vorrichtung mindestens ein Detektor zur Detektion von Strahlung vorgesehen, die von der Probe aufgrund der Bestrahlung mit der Lichtquelle emittiert wird. Die erfindungsgemäße Vorrichtung weist auch mindestens eine Detektionselektronik zum Bereitstellen eines Detektorsignals auf. Dieses Detektorsignal wird über mindestens eine Sendeeinheit der erfindungsgemäßen Vorrichtung drahtlos an eine Empfangseinheit, die nicht Teil der Vorrichtung und örtlich von der Vorrichtung getrennt ist, weitergegeben.

Die erfindungsgemäße Vorrichtung weist den Vorteil auf, daß sie sehr klein sowie leicht ausgebildet ist und zudem kostengünstig herzustellen ist. Sie ist zu dem Ort transportierbar, an dem eine Probe untersucht und dahingehend ausgewertet werden soll, ob an diesem Ort Schadstoffe existieren (Gefahrenzone). Der Transport der erfindungsgemäßen Vorrichtung zu diesem Ort erfolgt dabei ohne Gefährdung der Personen, die die Untersuchungen durchführen. Die mittels der erfindungsgemäßen Vorrichtung ermittelten Daten werden über die Sendeeinheit drahtlos an eine Empfangseinheit weitergeleitet, die sich nicht in der Gefahrenzone befindet, so daß eine Auswertung risikolos vorgenommen werden kann.

Die erfinaungsntäße Vorrichtung ist vorteilhaft in Pharmazie- oder Bio-Technologieanlagen und in Krankenhäusern mit Isolierstationen einsetzbar. Von Vorteil ist sie auch bei der Bestimmung von biologischen Schadstoffen, die zu militärischen Zwecken, insbesondere als Waffe, eingesetzt werden können.

Bei einer ersten Ausführungsform der Erfindung ist vorgesehen, daß die Sendeeinheit eine Funkeinheit oder eine Infraroteinheit ist. Von Vorteil ist eine Ausbildung der Sendeeinheit derart, daß eine Übertragung des Detektorsignals zu einem Satelliten erfolgt. Diese Ausführungsform ermöglicht es, daß das Detektorsignal auch von einer Empfangseinheit empfangen wird, die einen großen Abstand zur erfindungsgemäßen Vorrichtung aufweist. Dies ermöglicht beispielsweise eine einzelne zentrale Kontrolle mehrerer Pharmazie- und/oder Biotechnologieproduktionsstätten, die sich an unterschiedlichen Orten befinden. Bei einer besonderen Ausführungsform wird bei der Sendeeinheit als Übertragungsmittel die UMTS-Kommunikation verwendet.

Die erfindungsgemäße Vorrichtung ist vorzugsweise derart ausgebildet, daß sie lösbar an einem Fortbewegungsmittel befestigt werden kann. Als Forthewegungsmittel eignen sich beispielsweise Drohnen und Landroboter, die die erfindungsmäße Vorrichtung ferngesteuert zu dem Ort bringen, an dem eine Probe untersucht werden soll. Die Vorrichtung wird vorzugsweise deponiert, so daß das Fortbewegungsmittel wieder von dem Ort entfernt werden kann. Beispielsweise kann die erfindungsgemäße Vorrichtung aber auch von einem Hubschrauber oder einem anderen Starflügler über dem Ort der Untersuchung abgeworfen werden.

Bei einer weiteren Ausführungsform der Erfindung ist als Lichtquelle ein gepulster Laser vorgesehen. Alternativ hierzu ist auch ein kontinuierlicher Laser verwendbar. Vorzugsweise weist die Lichtquelle eine Laserdiode auf, die besonders klein ausgebildet ist und somit nur einen sehr geringen Bauraum in der Vorrichtung benötigt. Alternativ zu einem Laser ist aber auch eine LED verwendbar. Vorzugsweise sendet die Lichtquelle Licht mit einer Wellenlänge zwischen 500nm und 700nm aus.

Die Auswertung des Detektorsignals wird bei einer Ausführungsform der Erfindung erst in einer der Empfangseinheit nachgeschalteten Auswerteeinheit vorgenommen. Somit erfolgt die Auswertung bei dieser Ausführungsform nicht direkt in der erfindungsgemäßen Vorrichtung, sondern erst nach Übertragung des Detektorsignals von der Sendeeinheit an die Empfangseinheit. Bei einer alternativen Ausführungsform ist vorgesehen, die Auswertung des Detektorsignals bereits in der erfindungsgemäßen Vorrichtung vorzunehmen und das ausgewertete Detektorsignal an die Empfangseinheit zu senden. Hierzu ist in der erfindungsgemäßen Vorrichtung eine Auswerteeinheit entsprechend angeordnet. Diese Auswerteeinheit umfaßt beispielsweise einen Mikroprozessor und einen Speicher, in dem zum einen Detektorsignale zwischengespeichert werden können und zum anderen Vergleichsdaten abgelegt sind, die mit dem Detektorsignal verglichen werden, um festzustellen, ob ein Schadstoff in der Probe vorliegt. Die entsprechenden Vergleichsdaten sind vor Durchführung der Untersuchung im Speicher abgelegt worden.

Als Detektor ist bei der erfindungsgemäßen Vorrichtung vorzugsweise ein Halbleiterdetektor vorgesehen. Insbesondere Diodenzeilen-Spektrometer eignen sich besonders gut. Bei einigen Ausführungsformen ist alternativ ein Szintillationsdetektor in der Vorrichtung angeordnet.

Zur Detektion von biologischen Schadstoffen ist im Probenraum mindestens ein Reagenz zur Ankopplung an einen biologischen Schadstoff angeordnet. Diese Ausführungsform eignet sich insbesondere zum Nachweis für biologische Schadstoffe, die als biologische Waffen bzw. Kampfstoffe verwendet werden können. Wird ein bestimmtes Reagenz mit einem bestimmten derartigen biologischen Schadstoff zusammengebracht, so "dockt" das Reagenz nach dem sogenannten "Schlüssel-Loch"-Prinzip an Molekülen bzw. Atomen des biologischen Schadstoffs an. Beispielsweise wird ein ''Schlüssel-Loch"-Prinzip basierend auf einem Biotin/Streptavidin-System als universelles Detektionsverfahren verwendet. Ein weiteres "Schlüssel-Loch"-Prinzip ist die Verwendung eines Antigen und eines entsprechenden Antikörpers, was vorzugsweise zum Nachweis von Kampfstoffen und Toxinen verwenden wird. Mittels des "Schlüssel-Loch"-Prinzips basierend auf komplementären DNA-Strängen lassen sich beispielsweise Viren und bakterielle Erreger ermitteln.

Es ist vorteilhaft, das Reagenz bzw. die Reagenzien jeweils mit einem bestimmten Fluoreszenzmarker auszubilden, der ein bestimmtes Fluoreszenz-Spektrum aufweist. Bei Anregung dieses Systems mittels einer Lichtquelle, beispielsweise eines Laserstrahls, emittiert dieses System aus "angedocktem" Reagenz und biologischem Schadstoff Fluoreszenzstrahlung, die charakteristisch für dieses System und somit charakteristisch für einen bestimmten biologischen Schadstoff ist. Auf diese Weise ist es möglich, den biologischen Schadstoff zu identifizieren. Um mehrere derartige biologische Schadstoffe identifizieren zu können, sind unterschiedliche Reagenzien notwendig, wobei jeweils ein bestimmtes Reagenz an einen bestimmten biologischen Schadstoff "andockt". Aufgrund dessen ist es von Vorteil, im Probenraum zwei oder mehr unterschiedliche Reagenzien anzuordnen.

Das Reagenz bzw. die Reagenzien sind in einem Probenbehälter angeordnet. Dieser weist eine Längsachse auf, entlang derer die mehreren Reagenzien übereinander oder nebeneinander angeordnet sind. Der Probenbehälter wird vor einer Detektionsfläche des Detektors derart bewegt, daß nacheinander untersucht werden kann, ob verschiedene biologische Schadstoffe in der Probe enthalten sind. Die Erfindung ist nicht auf eine Anordnung der Reagenzien nebeneinander oder untereinander eingeschränkt. Vielmehr ist bei einer Ausführungsform der Erfindung vorgesehen, die Reagenzien untereinander zu mischen und mit der Probe in dieser Form zusammenzubringen.

Die erfindungsgemäße Vorrichtung weist vorzugsweise auch eine Pumpe auf, mit der möglicherweise mit einem Schadstoff kontaminierte Luft oder Flüssigkeit in den Probenraum der Vorrichtung eingebracht wird.

Das erfindungsgemäße Verfahren zur Detektion von Schadstoffen, insbesondere von chemischen und biologischen Schadstoffen zeichnet sich durch die folgenden Verfahrensschritte aus. Zunächst wird eine Vorrichtung mit mindestens einem der oben genannten Merkmale zu einem Ort transportiert, an dem möglicherweise durch Schadstoffe kontaminierte Luft oder Flüssigkeit untersucht werden soll. An diesem Ort wird eine Probe genommen und diese in den Probenraum der erfindungsgemäßen Vorrichtung eingebracht. Die Probe wird anschließend mit mindestens einer Reagenz, vorzugsweise mehreren Reagenzien zusammengebracht. Die Probe wird dann mit Licht der Lichtquelle bestrahlt und ein Detektor detektiert die von der Probe bzw. von dem System aus Probe und Reagenz, vorzugsweise von dem Reagenz emittierte Strahlung. Das auf diese Weise erhaltene Detektorsignal wird an eine Empfangseinheit weitergeleitet, Vorzugsweise wird das Detektorsignal vor der Weiterleitung an die Empfangseinheit in der Auswerteeinheit der Vorrichtung ausgewertet. Die Übertragung des Detektorsignals erfolgt drahtlos beispielsweise mittels Funk, Infrarot oder UMTS.

Die Erfindung betrifft auch ein System bestehend aus einer erfindungemäßen Vorrichtung, die mindestens eines der bereits erläuterten Merkmale aufweist, und aus einer Empfangseinheit. Sowohl das erfindungsgemäße Verfahren als auch das erfindungsgemäße System weisen dieselben Vorteile wie die erfindungsgemäße Vorrichtung auf.

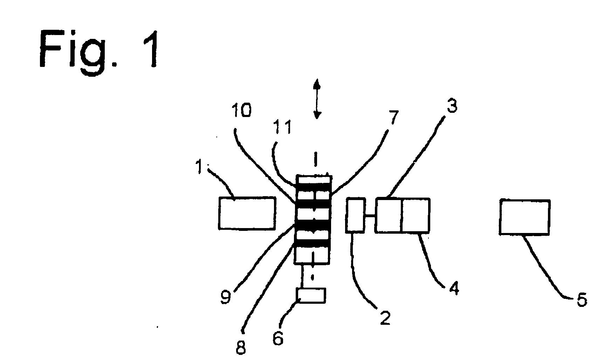

Die Erfindung wird nachfolgend anhand eines Ausführungsbeispiels anhand einer Figur näher beschrieben. Es zeigt
- Fig. 1: eine schematische Darstellung einer Vorrichtung gemäß der Erfindung sowie eine Empfangseinheit.

Fig. 1 zeigt ein Ausführungsbeispiel einer erfindungsgemäßen Vorrichtung zur Detektion von biologischen Schadstoffen. Die Vorrichtung weist eine Lichtquelle in Form einer Laserdiode 1 auf, die Licht aussendet. Diametral zur Laserdiode 1 ist ein Detektor in Form eines Diodenzcilen-Spektrometers 2 angeordnet, das wiederum mit einer Detektionselektronik 3 verbunden ist. Ferner weist die Vorrichtung eine Sendeeinheit 4 auf. Von der Vorrichtung örtlich getrennt angeordnet ist eine Empfangseinheit 5. Die Kommunikation zwischen der Sendeeinheit 4 und der Empfangseinheit 5 erfolgt bei dem dargestellten Ausführungsbeispiel über eine direkte Übertragung von Signalen per Funk. Alternativ ist vorgesehen, daß die Sendeeinheit 4 zunächst Signale an einen Satelliten sendet, der diese an die Empfangseinheit 5 weiterleitet.

Zwischen der Laserdiode 1 und dem Detektor 2 ist ein Probenbehälter 7 angeordnet, der entlang seiner Längsachse in Pfeilrichtung über eine elektronische Steuerung (nicht dargestellt) beweglich angeordnet ist. Der Probenbehälter 7 stellt auch den Probenraum dar, in dem die zu untersuchende Probe eingebracht wird. Hierzu ist eine Pumpe 6 vorgesehen, die möglicherweise mit biologischen Schadstoffen kontaminierte Luft kontrolliert in den Probenbehälter 7 einbringt. Im Probenbehälter 7 sind entlang dessen Längsachse übereinander jeweils unterschiedliche Reagenzien 8 bis 11 angeordnet. Die Reagenzien weisen jeweils 2 Komponenten auf. Eine Komponente ist geeignet, um an einem Atom oder Molekül eines ganz bestimmten biologischen Schadstoffs "anzudocken". Die weitere Komponente ist ein bestimmter Fluoreszenzmarker. Als besonderes geeignet haben sich Fluoreszenzmarker des Unternehmens Dyomics (www.dyomics.com) erwiesen. Beispielsweise sind diejenigen Fluoreszenzmarker geeignet, die unter den Produktbezeichnungen DY-630, DY-505, DY-485-XL, DY-479-XL, DY-480-XL sowie DY-520-XL durch das Unternehmen Dyomics vertrieben werden. Vorzugsweise ist jedem Reagenz ein unterschiedlicher Fluoreszenzmarker zugeordnet.

Die oben beschriebene Vorrichtung wird mittels eines unbemannten Fortbcwegungsmittels, beispielsweise eines Landroboters oder einer Drohne, an den Ort gebracht, an dem eine Luftprobe auf biologische Schadstoffe untersucht werden soll. Anschließend wird mittels der Pumpe 6 Luft in den Probenbehälter 7 eingebracht.

Sollte in der Probe ein biologischer Schadstoff oder mehrere biologische Schadstoffe enthalten sein, so reagiert das jeweilige Reagenz 8 bis 11 mit dem ihm zugeordneten biologischen Schadstoff. Nach dem "Schlüssel-Loch-Prinzip" wird das entsprechende Reagenz 8 bis 11 an ein Atom bzw. Molekül des jeweiligen biologischen Schadstoffs "andocken". Bei Anregung durch das Licht der Laserdiode emittieren die Fluoreszenzmarker eine charakteristische Strahlung, mit deren Hilfe der biologische Schadstoff identifiziert werden kann. Die Wellenlänge des von der Laserdiode emittierten Lichts liegt dabei vorzugsweise im Bereich vom 500nm bis 700nm. Die Erfindung ist aber nicht auf diesen Wellenlingenbereich beschränkt. Vielmehr ist jedwede Wellenlänge verwendbar, die als Anregungswellenlänge für die Fluoreszenz des Fluoreszenzmarkers geeignet ist.

Somit wird nach Einbringen der Probe in den Probenbehälter 7 die Probe im Probenbehälter 7 mit Licht der Laserdiode 1 bestrahlt. Die von der Probe bzw. den Reagenzien 8 bis 11 emittierte Fluoreszenzstrahlung wird mittels des Detektors 2 detektiert und in der Detektionselektronik 3 ausgewertet. Hierzu weist die Detektionselektronik 3 einen Mikroprozessor (nicht dargestellt) und eine Speichereinheit (nicht dargestellt) auf, in der Daten der charakteristischen Fluoreszenzspektren und der ihnen zugeordneten biologischen Schadstoffe bzw, der entsprechend zugehörigen Reagenzien gespeichert sind. Die detektierten Signale werden mit den in der Speichereinheit enthaltenen Daten verglichen, um festzustellen, ob ein bestimmter biologischer Schadstoff vorliegt oder nicht. Das Ergebnis dieses Vergleichs wird durch die Sendeeinheit 4 an die Empfangseinheit 5 weitergeleitet.

Alternativ sieht eine weitere Ausführungsform vor, daß die Auswertung der Detektorsignale nicht in der Vorrichtung selbst, sondern erst nach Senden der detektierten Signale an die Empfangseinheit 5 erfolgt. Bei dieser Ausführungsform ist der Empfangseinheit 5 eine Auswerteeinheit mit einem Mikroprozessor und mit einer Speichereinheit nachgeschaltet.

Die beschriebene Vorrichtung gemäß der Erfindung ist sehr klein und leicht ausgebildet. Aufgrund ihrer Größe und des Gewichts ist sie leicht transportierbar. Der Transport der Vorrichtung zu dem Ort der Untersuchung sowie die Untersuchung selbst erfolgt ohne Gefährdung von Personen, die die Untersuchung durchführen.

Die mittels der Vorrichtung ermittelten Daten werden über die Sendeeinheit 4 drahtlos an die Empfangseinheit 5 weitergeleitet, die sich nicht in der Gefahrenzone befindet, so daß eine Analyse der übermittelten Daten risikolos vorgenommen werden kann.

Die beschriebene Vorrichtung ist vorteilhaft in Pharmazie- oder Bio-Technologieatilagen und in Krankenhäusern mit Isolierstationen einsetzbar, um dort nach biologischen Schadstoffen zu suchen. Ferner ist sie auch besonders bei der Detektion von biologischen Schadstoffen geeignet, die als Waffe eingesetzt werden können.

### Bezugszeichenliste

- 1: Laserdiode
- 2: Diodenzeilen-Spektrometer (Detektor)
- 3: Detektionselektronik
- 4: Sendeeinheit
- 5: Empfangseinheit
- 6: Pumpe
- 7: Probenbehälter
- 8: Reagenz
- 9: Reagenz
- 10: Reagenz
- 11: Reagenz

## Patentansprüche

1. Vorrichtung zur Detektion von Schadstoffen, insbesondere chemische oder biologische Schadstoffe, mit
- mindestens einer Lichtquelle (1),
- mindestens einem Probenraum (7), in den eine zu untersuchende Probe eingeführt und in dem die Probe mittels der Lichtquelle (1) bestrahlt wird,
- mindestens einem Detektor (2) zur Detektion von der Probe emittierter Strahlung,
- mindestens einer Detektionselektronik (3) zum Bereitstellen eines Detektorsignals,
- mindestens einer Sendeeinheit (4) zum drahtlosen Weiterleiten des Detektorsignals an mindestens eine Empfangseinheit (5),
wobei im Probenraum (7) mindestens zwei oder mehr Reagenzien (8 bis 11) angeordnet sind, wobei jeweils ein Reagenz (8 bis 11) an jeweils einem biologischen Schadstoff ankoppelt und mit einem Fluoreszenzmarker ausgebildet ist,
**dadurch gekennzeichnet, dass** die mehreren Reagenzien (8 bis 11) in einem Probenbehälter (7), der auch den Probenraum (7) darstellt, angeordnet sind, der eine Längsachse aufweist, entlang derer die Reagenzien (8 bis 11) übereinander oder nebeneinander angeordnet sind, und der vor einer Detektionsfläche des Detektors (2) beweglich angeordnet ist.

2. Vorrichtung nach Anspruch 1, **dadurch gekennzeichnet, daß** die Sendeeinheit (4) eine Funkeinheit oder eine Infraroteinheit ist.

3. Vorrichtung nach Anspruch 1 oder 2, **dadurch gekennzeichnet, daß** die Sendeeinheit (4) zur Übertragung an einen Satelliten ausgebildet ist.

4. Vorrichtung nach einem der Ansprüche 1 bis 3, **dadurch gekennzeichnet, daß** die Sendeeinheit (4) als UMTS-Sendeeinheit ausgebildet ist.

5. Vorrichtung nach einem der Ansprüche 1 bis 4, **dadurch gekennzeichnet, daß** die Vorrichtung an einem Fortbewegungsmittel befestigbar ist.

6. Vorrichtung nach einem der Ansprüche 1 bis 5, **dadurch gekennzeichnet, daß** die Lichtquelle (I) als gepulster oder kontinuierlicher Laser ausgebildet ist.

7. Vorrichtung, nach Anspruch 6, **dadurch gekennzeichnet, daß** die Lichtquelle (I) mindestens eine Laserdiode aufweist.

8. Vorrichtung nach einem der Ansprüche 1 bis 7, **dadurch gekennzeichnet, daß** die Lichtquelle (I) mindestens eine LED aufweist.

9. Vorrichtung nach einem der Ansprüche 1 bis 8, **dadurch gekennzeichnet, daß** die Vorrichtung eine Auswerteeinheit (3) zur Auswertung des Detektorsignals vor Weiterleitung an eine Empfangseinheit (5) aufweist.

10. Vorrichtung nach einem der Ansprüche 1 bis 9, **dadurch gekennzeichnet, daß** der Detektor (2) als Szintillationsdetektor oder Halbleiterdetektor ausgebildet ist.

11. Vorrichtung nach Anspruch 10, **dadurch gekennzeichnet, daß** der Detektor (2) als Diodenzeilen-Spektrometer ausgebildet ist.

12. Vorrichtung nach einem der Ansprüche 1 bis 11, **dadurch gekennzeichnet, daß** die mehreren Reagenzien (8 bis 11) jeweils mit einem unterschiedlichen Fluoreszenzmarker ausgebildet sind.

13. Vorrichtung nach einem der Ansprüche 1 bis 12, **gekennzeichnet durch** eine Pumpe (6) zum Einbringen einer Probe in den Probenraum (7).

14. System mit einer Vorrichtung nach einem der Ansprüche 1 bis 13 sowie mit einer Empfangseinheit (5).

15. Verfahren zur Detektion von Schadstoffen, insbesondere von chemischen und biologischen Schadstoffen, mit den folgenden Schritten:
- Transport einer Vorrichtung gemäß einem der Ansprüche 1 bis 13 zu einem Ort, an dem Schadstoffe detektiert werden sollen;
- Einbringen einer Probe in den Probenraum (7);
- Zusammenbringen der Probe mit den mindesten zwei oder mehr Pragenzen (8 bis 11);
- Einstrahlung von Licht in den Probenraum (7);
- Detektion von durch die Probe emittierter Strahlung;
- drahtlose Weiterleitung eines Detektorsignals an eine Empfangseinheit (5).

16. Verfahren nach Anspruch 15, wobei das Detektorsignal vor Weiterleitung an die Empfangseinheit (5) ausgewertet wird.

17. Verfahren nach Anspruch 15 oder 16, wobei der Transport der Vorrichtung mittels eines Fortbewegungsmittels erfolgt.

18. Verfahren nach einem der Ansprüche 15 bis 17, wobei die Übertragung an die Empfangseinheit (5) durch Funk, Infrarot oder UMTS erfolgt.

## Claims

1. A device for detecting harmful substances, in particular chemical or biological harmful substances, having
- at least one light source (1),
- at least one sample chamber (7) into which a sample to be investigated is introduced and in which the sample is irradiated by means of the light source (1),
- at least one detector (2) for detecting radiation emitted by the sample,
- at least one electronic detection means (3) for providing a detector signal,
- at least one transmit unit (4) for wirelessly relaying the detector signal to at least one receive unit (5),
at least two or more reagents (8 to 11) being arranged in the sample chamber (7), one reagent (8 to 11) in each case coupling to a biological harmful substance and being provided with a fluorescence marker, **characterised in that**
the two or more reagents (8 to 11) are arranged in a sample container (7), which also constitutes the sample chamber (7), which comprises a longitudinal axis along which the reagents (8 to 11) are arranged one above or beside the other and in front of which a detection surface of the detector (2) is arranged in mobile manner.

2. A device according to claim 1, **characterised in that** the transmit unit (4) is a radio unit or an infrared unit.

3. A device according to claim 1 or 2, **characterised in that** the transmit unit (4) is configured for transmission to a satellite.

4. A device according to any one of claims 1 to 3, **characterised in that** the transmit unit (4) is configured as a UMTS transmit unit.

5. A device according to any one of claims 1 to 4, **characterised in that** the device may be fixed to a means of transport.

6. A device according to any one of claims 1 to 5, **characterised in that** the light source (1) takes the form of a pulsed or continuous laser.

7. A device according to claim 6, **characterised in that** the light source (1) comprises at least one laser diode.

8. A device according to any one of claims 1 to 7, **characterised in that** the light source (1) comprises at least one LED.

9. A device according to any one of claims 1 to 8, **characterised in that** the device comprises an evaluation unit (3) for evaluating the detector signal prior to relay to a receive unit (5).

10. A device according to any one of claims 1 to 9, **characterised in that** the detector (2) takes the form of a scintillation detector or semiconductor detector.

11. A device according to claim 10, **characterised in that** the detector (2) takes the form of a diode array spectrometer.

12. A device according to any one of claims 1 to 11, **characterised in that** the two or more reagents (8 to 11) are in each case provided with a different fluorescence marker.

13. A device according to any one of claims 1 to 12, **characterised by** a pump (6) for introducing a sample into the sample chamber (7).

14. A system having a device according to any one of claims 1 to 13 and having a receive unit (5).

15. A method for detecting harmful substances, in particular chemical and biological harmful substances, having the following steps:
- transporting a device according to any one of claims 1 to 13 to a location at which harmful substances are to be detected;
- introducing a sample into the sample chamber (7);
- bringing the sample into contact with the at least two or more reagents (8 to 11);
- irradiating light into the sample chamber (7);
- detecting radiation emitted by the sample;
- wirelessly relaying a detector signal to a receive unit (5).

16. A method according to claim 15, wherein the detector signal is evaluated prior to being relayed to the receive unit (5).

17. A method according to claim 15 or 16, wherein the device is transported by a means of transport.

18. A method according to any one of claims 15 to 17, wherein transmission to the receive unit (5) proceeds by radio, infrared or UMTS.

## Revendications

1. Dispositif de détection de polluants, en particulier de polluants chimiques ou biologiques, comprenant
■ au moins une source de lumière (1),
■ au moins une chambre de test (7), dans laquelle est introduit un échantillon devant être testé et dans laquelle ledit échantillon est irradié par la source de lumière (1),
■ au moins un détecteur (2) pour détecter les radiations émises par l'échantillon,
■ au moins un dispositif de détection électronique (3) pour fournir un signal de détection,
■ au moins un transmetteur (4) pour la transmission sans fil du signal de détection à au moins une unité de réception (5),
et dans lequel au moins deux réactifs (8 à 11) sont agencés dans la chambre de test (7), chacun des réactifs (8 à 11) étant couplé à au moins un polluant biologique et chacun étant constitué d'un marqueur fluorescent,
**caractérisé par le fait que** les réactifs (8 à 11) sont agencés dans un container de test (7), qui constitue également la chambre de test, ledit container de test (7) présentant un axe longitudinal le long duquel les réactifs (8 à 11) sont superposés ou côte à côte et ledit container étant agencé de façon mobile devant une surface de détection du détecteur (2).

2. Dispositif selon la revendication 1, **caractérisé par le fait que** le transmetteur (4) est un transmetteur radio ou un transmetteur infrarouge.

3. Dispositif selon la revendication 1 ou 2, **caractérisé par le fait que** le transmetteur (4) est adapté pour la transmission par satellite.

4. Dispositif selon l'une des revendications 1 à 3, **caractérisé par le fait que** le transmetteur (4) est constitué d'un transmetteur-UMTS.

5. Dispositif selon l'une des revendications 1 à 4, **caractérisé par le fait qu'**il est attaché à des moyens d'acheminement.

6. Dispositif selon l'une des revendications 1 à 5, **caractérisé par le fait que** la source de lumière (1) est constituée d'un laser pulsé ou continu.

7. Dispositif selon la revendication 6, **caractérisé par le fait que** la source de lumière (1) comprend au moins une diode laser.

8. Dispositif selon l'une des revendications 1 à 7, **caractérisé par le fait que** la source de lumière (1) comprend au moins une diode électroluminescente (LED).

9. Dispositif selon l'une des revendications 1 à 8, **caractérisé par le fait qu'**il comprend une unité d'évaluation (3) pour évaluer le signal de détection avant sa transmission à l'unité de réception (5).

10. Dispositif selon l'une des revendications 1 à 9, **caractérisé par le fait que** le détecteur (2) est constitué par un détecteur à scintillation ou un détecteur à semi-conducteur.

11. Dispositif selon la revendication 10, **caractérisé par le fait que** le détecteur (2) est constitué par un spectromètre à diodes en ligne.

12. Dispositif selon l'une des revendications 1 à 11, **caractérisé par le fait que** les réactifs (8 à 11) sont chacun constitués d'un marqueur fluorescent différent.

13. Dispositif selon l'une des revendications 1 à 12, **caractérisé par le fait qu'**il comprend une pompe (6) pour amener un échantillon dans la chambre de test (7).

14. Système comprenant un dispositif selon l'une des revendications 1 à 13 ainsi qu'une unité de réception (5).

15. Procédé de détection de polluants, en particulier de polluants chimiques ou biologiques, comprenant les étapes suivantes :
■ Transport d'un dispositif de détection de polluants selon l'une des revendications 1 à 13 à un endroit où des polluants doivent être détectés,
■ Introduction d'un échantillon dans la chambre de test (7),
■ Couplage de l'échantillon et d'au moins deux ou plus des réactifs (8 à 11),
■ Irradiation par lumière dans la chambre de test (7),
■ Détection des radiations émises par l'échantillon,
■ Transmission sans fil d'un signal de détection à au moins une unité de réception (5).

16. Procédé selon la revendication 15, dans lequel le signal de détection est évalué avant d'être transmis à l'unité de réception (5).

17. Procédé selon la revendications 15 ou 16, dans lequel le transport du dispositif se fait grâce à des moyens d'acheminement.

18. Procédé selon l'une des revendications 15 à 17, dans lequel la transmission à l'unité de réception se fait via radio, infrarouge ou UMTS.
